# EUROPEAN PATENT APPLICATION

(11) **EP 0 693 393 A1**
(43) Date of publication of application: **24.01.1996**
(21) Application number: 95304666.1
(22) Date of filing: 04.07.1995
(51) Int. Cl.: B60N 2/28

(54) **Child safety seat for automotive vehicles**

(30) Priority: 16.07.1994 GB 9414418
(71) Applicant: Britax-Excelsior Limited, Warwick CV34 6DE (GB); BRITAX RÖMER Kindersicherheit GmbH, D-89077 Ulm (DE)
(72) Inventor: Burleigh, David William, Bognor Regis, West Sussex PO21 4XN (GB); Barley, Geoffrey Wilfred, Salisbury, Wiltshire SP5 1DQ (GB); Czernakowski, Waldemar, D-89134 Blaustein (DE); Wetter, Hermann, D-89075 Ulm (DE)
(74) Representative: Hollinghurst, Antony

(57) **Abstract**

A child safety seat, for use in a vehicle, comprises a seat body (50) and a pair of rigid legs (60, 72) which are pivotally mounted on the seat body (50) for angular movement about respective mutually parallel axes spaced apart from one another. The legs (60, 72), are connectable, by respective releasable connectors (64, 76) on their free ends, to anchorages on the vehicle. A coupling link (88) interconnects the legs (60, 72) for simultaneous angular movement about their respective pivot axes.

## Description

This invention relates to a child safety seat, for use in a vehicle, comprising a seat body and releasable coupling means for connecting the seat body to a motor vehicle.

It is well known for the coupling means of a seat of this type to comprise an adult seat belt, the child seat resting on the corresponding vehicle seat. The disadvantage of this arrangement is that, even if the adult belt is pulled very tight during installation, the resilience of both the vehicle seat and the adult belt, will permit undesirable movement of the child seat relative to the vehicle in the event of sudden deceleration, for example, during an accident. In order to overcome this disadvantage, it has been proposed to provide motor cars with standard anchorage units at agreed locations for engagement by releasable connectors which are rigidly coupled to a child seat. Such anchorage units will be referred to hereinafter as "standard anchorage units". The present invention is concerned with the provision of a child safety seat which can be used with standard anchorage units.

According to the invention in a child safety seat of the type described above, the releasable coupling means comprises a pair of rigid legs which are pivotally mounted on the seat body for angular movement about respective mutually parallel axes spaced apart from one another, a respective releasable connector on the free end of each leg, and coupling means interconnecting said legs for simultaneous angular movement about their respective pivot axes.

The coupling means may comprise a link pivotally interconnected at each end to a respective leg. Alternatively, each pivot axis may include a shaft to which the corresponding leg is secured for simultaneous angular movement and the coupling means constrains the two shafts to rotate simultaneously. In this case, the coupling means may comprise a chain engaging with a respective sprocket mounted on each of the shafts. Alternatively, the coupling means may comprise a rigid link pivotally connected to respective auxiliary levers mounted on each of the shafts.

In one form of the invention, the coupling means further comprises a second pair of legs, each of which is mounted coaxially with a corresponding leg of the first pair of pivot legs and each of which has a respective releasable connector on its free end. Preferably, each the of second pair of legs is coupled to the corresponding leg of the first pair for simultaneous angular movement therewith.

Embodiments of the invention will now be described, by way of example, with reference to the accompanying drawings, in which:
Figure 1 is a perspective view of a vehicle seat equipped with standard anchorage units of the type described above;
Figure 2 is a perspective view of a known child seat rigidly secured to the standard anchorage units of the seat shown in Figure 1;
Figure 3 is a perspective view of a first embodiment of the invention, having its legs oriented in angular positions suitable for engagement with the standard anchorage units of the vehicle seat shown in Figure 1;
Figure 4 is a side view of the seat shown in Figure 3;
Figure 5 is a perspective view of the seat shown in Figures 3 and 4 but with its legs in stowed positions;
Figure 6 is a side view corresponding to Figure 5;
Figure 7 is a perspective view of a second embodiment of the invention; and
Figure 8 is a perspective view of a third embodiment of the invention.

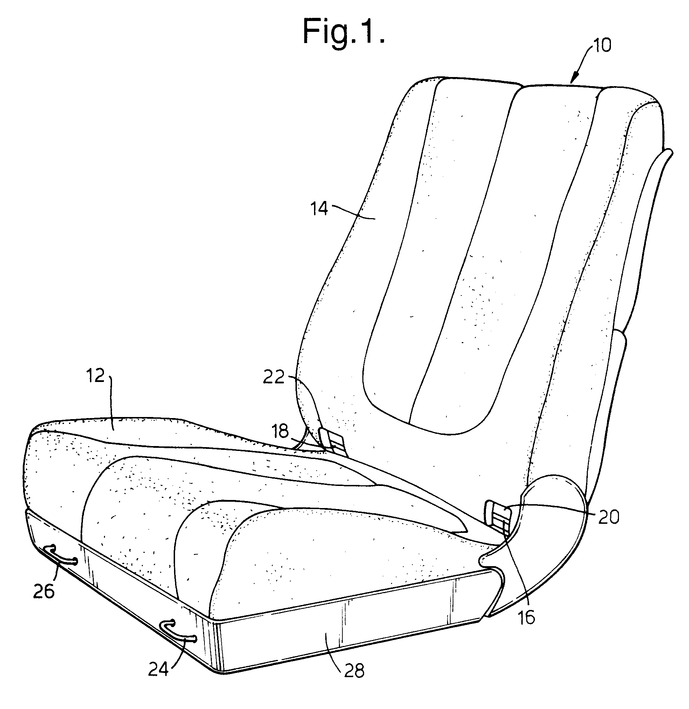

Figure 1 shows a vehicle seat 10 equipped with two front standard anchorage units and two rear standard anchorage units of the type described above. The seat comprises a seat portion 12 and a backrest 14. The rear standard anchorage units comprise transversely extending rods 16 and 18 which are accessible through openings 20 and 22 in the bottom of the backrest and which are rigidly secured to the frame (not shown) of the seat 10. The front standard anchorage units comprise U-shaped rods 24 and 26 which have the ends of their limbs secured to the front edge of a base portion 28 of the seat portion 12.

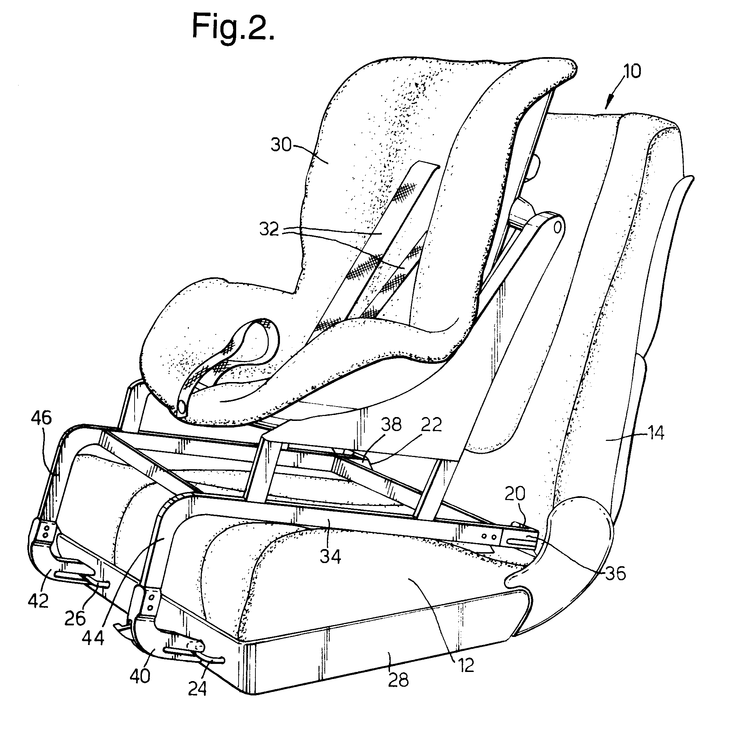

As shown in Figure 2, a known child safety seat 30, equipped with a child harness 32 is mounted on a support frame 34 above the seat portion 12 of the vehicle seat 10. The frame 34 has releasable connectors in the form of buckles 36 and 38 on its rear end engaging with the standard anchorage units 16 and 18, and similar buckle units 40 and 42 on respective legs 44 and 46 which extend downwardly in front of the seat portion 12 so that the buckles 40 and 42 engage with the front standard anchorage units 24 and 26. The buckles 36, 38, 40 and 42 may be as described in EP-A-0619201. The longitudinal members of the frame 34 may include telescopic sections, to permit adjustment to suit vehicle seats with differing lengths of the seat portion 12.

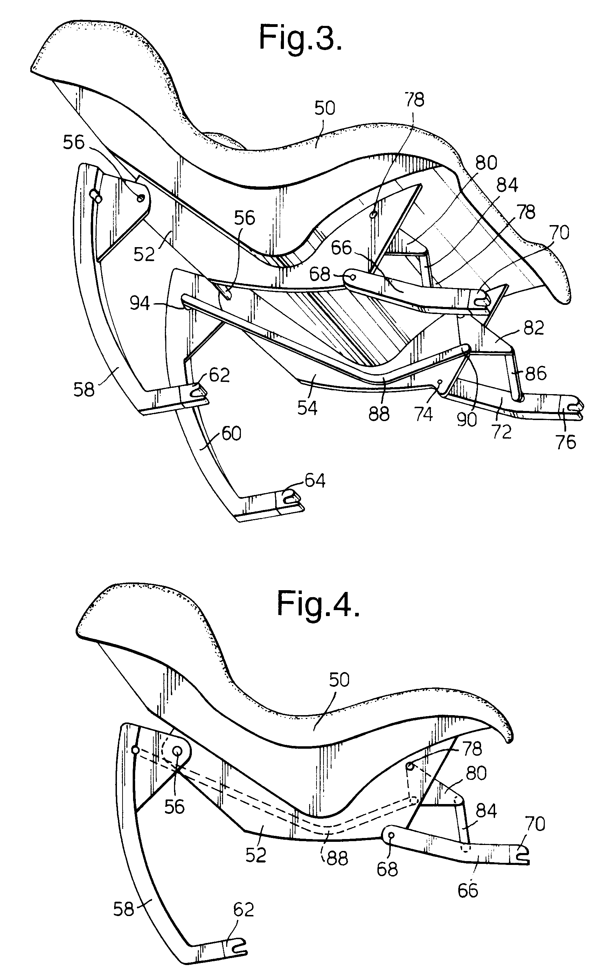

Figure 3 illustrates a child safety seat in accordance with the invention, intended to be used with a child occupant facing rearwards in the vehicle. This seat comprises a seat shell 50 with longitudinal ribs 52 and 54 on its outer side. A transversely extending shaft 56 is journalled in the ribs 52 and 54. Two legs 58 and 60 are secured to respective ends of the shaft 56 for simultaneous angular movement therewith. The free ends of the legs 58 and 60 carry respective buckles 62 and 64 which are engageable with the front standard anchorage units 24 and 26 of the vehicle seat shown in Figure 1.

A shorter rear leg 66 is pivotally mounted at a pivot point 68 on the rib 52 and has a buckle 70 for engagement with the rear standard anchorage unit 20. A similar leg 72 is pivotally attached at a pivot point 74 to the other rib 54 and has a buckle 76 for engagement with the other rear standard anchorage unit 22. A second shaft 78 extends between the ribs 52 and 54, above the pivot points 68 and 74. The shaft 78 has a pair of triangular plates 80 and 82 mounted thereon for simultaneous rotation therewith. Respective links 84 and 86 have one end pivotally connected to one of the plates 80 and 82 and the other end pivotally connected to a respective one of the rear legs 66 and 72, thus ensuring simultaneous angular movement of these two legs. To ensure that the rear legs 66 and 72 pivot simultaneously with the front legs 58 and 60, a connecting link 88 extends between a pivot point 90 on the triangular plate 82 and a pivot point 94 on the front leg 60. However, the geometry of the various links is such that movement of the front legs 58 and 60, through the range necessary to suit vehicles with differing lengths of the seat portion 12, causes very little movement of the rear legs 66 and 72, and consequently very little change in the attitude of the seat shell 50.

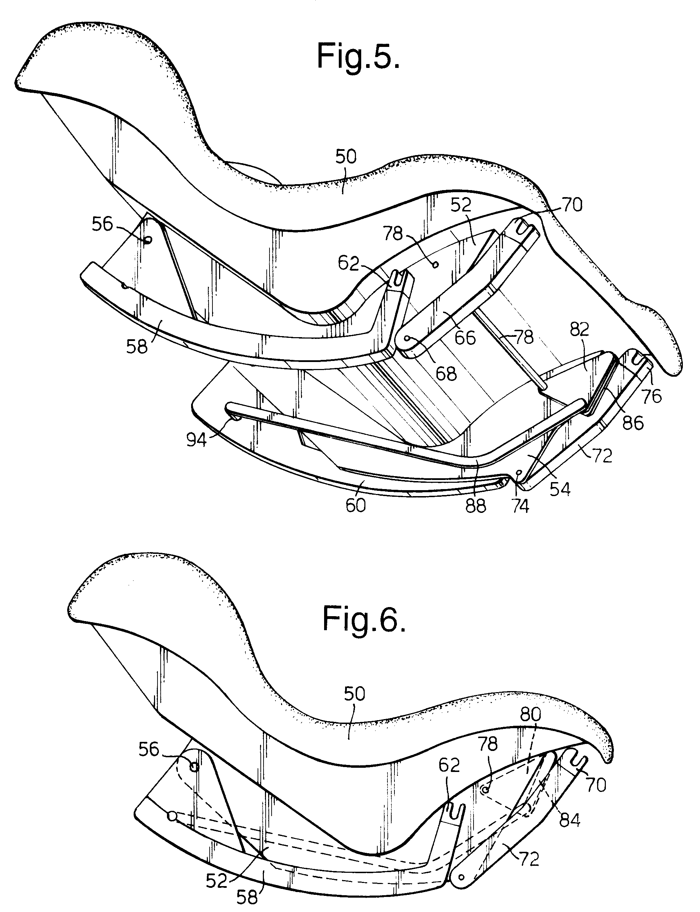

When the child seat is removed from the vehicle seat 10, the legs 58, 60, 66 and 72 may be folded away as illustrated in Figures 5 and 6, the shafts 56 and 78 and the links 84, 86 and 88 ensuring that all four legs fold simultaneously. The legs 58 and 60 are formed of generally arcuate shape so that, when in the folded position illustrated in Figures 5 and 6, they serve as a rocking base for the seat shell 50. If a static base is required, the arcuate legs 58 and 60 may be replaced by straight legs.

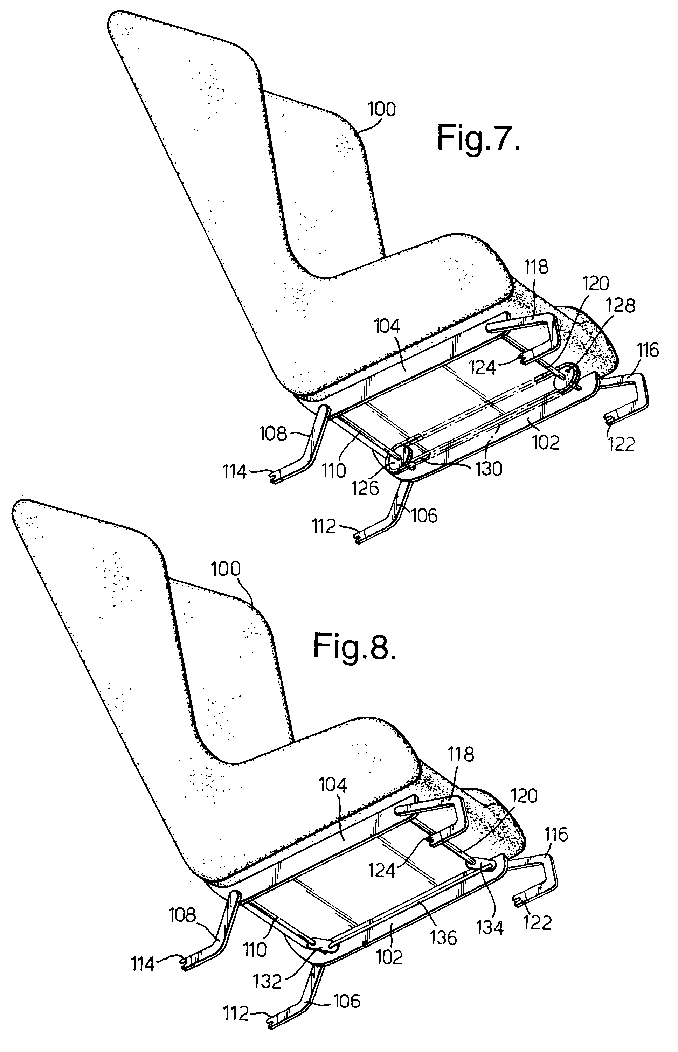

Figure 7 shows another child seat in accordance with the invention intended to be used with a child occupant facing forwards in the vehicle. This seat comprises a seat shell 100 with longitudinal ribs 102 and 104 on its bottom surface. A pair of rear legs 106 and 108 are secured to the end of a rear shaft 110 which is rotatably mounted on the ribs 102 and 104. The legs 106 and 108 have buckles 112 and 114 on their free ends for engagement with the rear standard anchorages 16 and 18 (Figure 1). The seat 100 also has front legs 116 and 118 secured to the ends of a front shaft 120 which is also rotatably mounted on the ribs 102 and 104. The legs 116 and 118 have respective buckles 122 and 124 on their free ends for engagement with the front standard anchorages 24 and 26 (Figure 1).

To effect simultaneous folding of the legs 106, 108, 116 and 118 to a stowed position, respective sprockets 126 and 128 are mounted on the rear shaft 110 and the front shaft 120 respectively and are secured fast with their respective shafts. A chain 130 extends round the sprockets 126 and 128 so as to link the shafts 110 and 120 for simultaneous angular movement, position.

Figure 8 illustrates a modification of the seat shown in Figure 7. Many of the component parts of the seat shown in Figure 8 are identical with the corresponding components of the seat shown in Figure 7. Such identical components are denoted with the same reference numerals and are not described in detail.

In place of the sprockets 126 and 128 and the chain 130 of Figure 7, the seat shown in Figure 8 has respective crank levers 132 and 134 projecting radially from and secured fast with the rear and front shafts 110 and 120 respectively. The radially outer ends of the levers 132 and 134 are pivotally coupled to respective ends of a connecting rod 136 which ensures that angular movement of the two shafts 110 and 120 takes place simultaneously, clockwise movement displacing the legs 106, 108, 116 and 118 to their stowed position.

## Claims

1. A child safety seat, for use in a vehicle, comprising a seat body (50; 100) and releasable coupling means for connecting the seat body (50; 100) to a motor vehicle, characterised in that the releasable coupling means comprises a pair of rigid legs (60, 72; 106, 116) which are pivotally mounted on the seat body (50, 100) for angular movement about respective mutually parallel axes spaced apart from one another, a respective releasable connector (64, 76; 112, 122) on the free end of each leg (60, 72; 106, 116), and coupling means interconnecting said legs (60, 72; 106, 116) for simultaneous angular movement about their respective pivot axes.

2. A child safety seat according to claim 1, wherein the coupling means comprises a link (88, 136) pivotally interconnected at each end to a respective leg (60, 72; 106, 116).

3. A child safety seat according to claim 1, wherein each pivot axis includes a respective shaft (56, 78; 110, 120) to which the corresponding leg (60, 72; 106, 116) is secured for simultaneous angular movement and the coupling means (130; 136) constrains the two shafts (110, 120) to rotate simultaneously.

4. A child safety seat according to claim 3, wherein the coupling means comprises a chain (130) engaging with a respective sprocket (126, 128) mounted on each of the shafts (110, 120).

5. A child safety seat according to claim 1, 2 or 3, wherein the coupling means comprises a rigid link (88; 136) pivotally connected to respective auxiliary levers mounted on each of the shafts.

6. A child safety seat according to any preceding claim, wherein the coupling means further comprises a second pair of legs (58, 66; 108, 118), each of which is mounted coaxially with a corresponding leg (60, 72; 106, 116) of the first pair of pivot legs, each of the second pair of legs (58, 66; 108, 118) having a respective releasable connector (62, 70; 114, 124) on its free end.

7. A child safety seat according to claim 6, wherein each of the second pair of legs (58, 66; 108, 118) is coupled to the corresponding leg (60, 72; 106, 116) of the first pair for simultaneous angular movement therewith.

8. A child safety seat according to any preceding claim, in combination with a vehicle, the vehicle having an adult vehicle seat (10) with a seat portion (12) and a backrest portion (14), a front anchorage unit (24, 26) rigidly secured to the vehicle below the front edge of a vehicle seat (10) for engagement by one of said releasable connectors (64; 122) and a rear anchorage unit (16, 18) rigidly secured to the vehicle at the bottom of the backrest portion of the vehicle seat for engagement by another of said releasable connectors (76; 112).
